# DEMANDE DE BREVET EUROPEEN

(11) **EP 4 744 485 A1**
(43) Date de publication de la demande: **20.05.2026**
(21) Numéro de dépôt: 25216088.2
(22) Date de dépôt: 14.11.2025
(51) Int. Cl.: A01M 31/00, G01C 15/00

(54) **DISPOSITIF DE SÉCURITÉ ET DE VISUALISATION D'UN ANGLE DE SÉCURITÉ POUR LE TIR, NOTAMMENT POUR LE TIR À LA CHASSE, ET SON PROCÉDÉ DE MISE EN UVRE**

(30) Priorité: 14.11.2024 FR 2412435
(71) Demandeur: Protec Chasse, 41210 Neung-sur-Beuvron (FR)
(72) Inventeur: POITEVIN, Jean-Philippe, 41210 NEUNG-SUR-BEUVRON (FR); LACHENY, Laurent, 41210 NEUNG-SUR-BEUVRON (FR); BLUTIER, Nicolas, 41210 NEUNG-SUR-BEUVRON (FR); MORSOLETTO, Thierry, 41210 NEUNG-SUR-BEUVRON (FR)
(74) Mandataire: Aupetit, Muriel J. C.

(57) **Abrégé**

Dispositif (1A ; 1B) de sécurité et de visualisation d'un angle de sécurité pour le tir, notamment pour le tir à la chasse, comportant un boîtier (2) qui loge au moins un système de génération d'au moins un faisceau lumineux dans le domaine des longueurs d'ondes du visible, le faisceau sortant du boitier étant apte à délimiter un angle de sécurité pour le tir par rapport une ligne de référence, caractérisé en ce que le faisceau est déplaçable angulairement tandis que le boîtier reste fixe et en ce que le faisceau adopte une première position qui correspond à la ligne de référence et une seconde position qui est décalée de l'angle de sécurité par rapport à la première position.

## Description

L'invention concerne un dispositif de sécurité et de visualisation d'un angle de sécurité pour le tir, notamment pour le tir à la chasse.

Les règles de sécurité en matière de chasse, notamment en battue, imposent aux chasseurs qui sont postés de définir à leur droite et à leur gauche des angles de sécurité par rapport à l'élément voisin le plus exposé, tel que son voisin, une maison, etc. L'angle de sécurité en France est de 30°. Le plus souvent, chaque angle de sécurité est déterminé en effectuant cinq pas dans la direction de l'élément à protéger puis trois pas perpendiculairement, et l'angle est ensuite matérialisé par un bâton.

Toutefois, cette mesure reste approximative, ce qui peut être considéré comme insuffisamment sécuritaire.

Il existe aussi un système à drapeaux se fixant sur les miradors.

Cependant, ces dispositifs dits de proximité (méthode des pas ou système à drapeaux) matérialisent les angles sur une petite distance, ce qui n'est pas si fiable.

Par ailleurs, il est connu un dispositif décrit dans la demande de brevet FR3080675 ou dans la demande de brevet EP3978861, qui utilise deux faisceaux laser qui sont fixes et écartés angulairement de 30°. L'utilisateur en pointant l'un des faisceaux dans la direction de l'élément à protéger, visualise alors l'angle prédéfini de 30°grâce au second faisceau.

Néanmoins, ces dispositifs de l'art antérieur sont mis en œuvre par l'utilisateur en les gardant à la main. Or, il suffit que l'utilisateur bouge un peu lors du repérage de l'élément à protéger pour fausser l'angle de sécurité. De plus, l'utilisateur doit être attentif à bien visualiser le faisceau qui est toujours au plus proche de lui pour repérer la ligne limite de tir, ce qui n'est pas toujours sans risque si l'utilisateur n'est pas assez attentif; il peut en effet se tromper et considérer l'autre faisceau (les faisceaux étant fixes en formant un V). Par ailleurs, ce dispositif ne convient pas si l'utilisateur souhaite une autre valeur d'angle de sécurité.

L'invention a donc pour but de proposer un dispositif de sécurité et de visualisation d'un angle sécurisé de tir, qui obvie aux inconvénients précités et soit aisé et rapide de mise en œuvre.

L'invention s'applique à délimiter une zone de tir et sécuriser l'environnement, aussi bien pour du tir par armes à feu qu'à l'arc.

Selon l'invention, le dispositif de sécurité et de visualisation d'un angle de sécurité pour le tir, notamment pour le tir à la chasse, comporte un boîtier qui loge au moins un système de génération d'au moins un faisceau lumineux dans le domaine des longueurs d'ondes du visible, le faisceau sortant du boitier étant apte à délimiter un angle de sécurité pour le tir par rapport à une ligne de référence, le dispositif étant caractérisé en ce que le faisceau est déplaçable angulairement tandis que le boîtier reste fixe et en ce que le faisceau adopte une première position qui correspond à la ligne de référence et une seconde position qui est décalée de l'angle de sécurité par rapport à la première position (la première position n'étant alors plus visible).

Par conséquent, selon une caractéristique, le dispositif comporte un faisceau unique qui sert (dans un premier temps) de (ligne de) référence de l'obstacle et (dans un second temps) de (ligne de) référence de l'angle de sécurité de tir par rapport à l'obstacle.

Le dispositif n'utilise donc qu'un seul faisceau pour déterminer l'angle de tir à sa gauche ou à sa droite par rapport à l'obstacle. Ainsi, le tireur ne peut pas se tromper, il visualise systématiquement la zone de tir car il n'y a qu'un seul et unique faisceau qui reste visible sur l'un des côtés de l'utilisateur, au contraire de l'art antérieur dont les dispositifs génèrent pour l'un des côtés de l'utilisateur deux faisceaux, ce qui peut entraîner un risque de confusion. Le dispositif de l'invention matérialise directement la zone de tir en définissant la zone intérieure de sécurité qui est délimitée entre le tireur et le seul faisceau visible (à sa droite ou sa gauche) généré par le dispositif.

De plus, le dispositif de l'invention permet de s'adapter à n'importe quelle position où se trouve l'obstacle à sécuriser, aussi bien lorsque plusieurs tireurs sont postés en ligne que lorsqu'un objet ou une personne à sécuriser fait un angle par rapport à une ligne de poste.

Par ailleurs, le dispositif avec son faisceau laser, et d'autant plus lorsque le dispositif est installé en hauteur, pointe jusqu'à une quinzaine de mètres, ce qui permet à l'utilisateur d'obtenir un repère visuel bien plus loin que les repères de proximité immédiate des systèmes de l'art antérieur. En outre, cela procure une vision de la zone de tir bien plus éloignée.

De préférence, le faisceau éclaire entre 500 et 590 nm.

Dans la suite de la description le terme de « hauteur », les qualificatifs « supérieur », « inférieur », « haut » et « bas » d'un élément du dispositif sont utilisés dans le cadre d'une installation normale du dispositif, c'est-à-dire relatif à une notion verticale par rapport à une surface d'accueil horizontale sur lequel serait posé le dispositif.

Selon une caractéristique, le dispositif comporte au moins une forme adaptée de fixation pour installer en position d'utilisation le dispositif de manière fixe et en hauteur, en particulier pour l'installer sur un support d'installation de mise en hauteur tel qu'un trépied ou autre support approprié de fixation pour se fixer à une structure existante notamment un mirador. De cette façon, le dispositif peut être facilement fixé sans risque de bouger une fois installé (il est parfaitement stable), il peut être mis en fonctionnement en garantissant que le faisceau obtenu sera fiable.

Dans une première configuration, le dispositif comprend un seul système de génération d'un seul faisceau lumineux. Cette configuration permet d'alléger le dispositif. Le dispositif sert alors à délimiter un angle de sécurité soit à droite, soit à gauche du tireur. Une fois que le faisceau aura éclairé la ligne de l'angle de sécurité, par exemple à la droite de l'utilisateur, celui-ci pourra matérialiser l'angle en plaçant au sol au niveau du faisceau un marqueur physique stable du type tige, brindilles, branche d'arbre. Cette matérialisation pourra se faire jusqu'à l'extrémité du faisceau, en particulier à une quinzaine de mètres, ce qui permettra de visualiser de manière éloignée l'angle de sécurité. Puis il tournera le dispositif pour le faire fonctionner de l'autre côté, par exemple à sa gauche en positionnant le faisceau sur l'obstacle et ensuite par actionnement sur le dispositif, le faisceau tournera jusqu'à l'angle de sécurité. Il visualisera le faisceau et donc l'angle de sécurité à sa gauche.

Dans une seconde configuration, le dispositif comprend deux systèmes de génération de respectivement deux faisceaux distincts lumineux dans le domaine des longueurs d'ondes du visible, et les faisceaux qui sortent du boitier (après déplacement angulaire de chacun), délimitent deux angles de sécurité respectifs à droite et à gauche du dispositif (c'est-à-dire un premier angle de sécurité par rapport à un premier obstacle à sécuriser à la droite du dispositif et un second angle de sécurité par rapport à un second obstacle à sécuriser à la gauche du dispositif). Cette seconde configuration permet avec un seul dispositif de visualiser la zone de tir autorisée avec en même temps les lignes de limite à droite et à gauche du tireur.

Dans la seconde configuration, selon une caractéristique, les deux faisceaux sont déplaçables angulairement de manière indépendante l'un par rapport à l'autre, le déplacement angulaire de chacun des deux faisceaux étant référencé par rapport à une première position de référence qui a été donnée de manière indépendante à chacun des faisceaux.

Selon une caractéristique, le dispositif comporte, couplé à un système de génération d'un faisceau (donc couplé au faisceau), un système de déplacement angulaire du faisceau qui est semi-automatisé en étant manuel via un organe d'interface-utilisateur tel qu'un bouton à tourner ou sur lequel appuyer pour établir la première position puis en étant automatisé pour passer directement de la première position à la seconde position sans intervention de l'utilisateur. Ainsi, le dispositif est simple de fabrication (organes d'interface et moyens électroniques de commande) et simple de mise en œuvre, tout en étant fiable. En effet, l'utilisateur a la maitrise de l'organe d'interface pour cibler exactement l'obstacle à sécuriser, et est ensuite assuré que le faisceau de limite de tir sera au bon endroit sans risque de s'être trompé d'angle.

Par conséquent, selon une caractéristique, le dispositif comporte, couplé à un système de génération d'un faisceau (donc couplé au faisceau), un système de déplacement angulaire du faisceau, qui est automatisé pour passer de la première position du faisceau à la seconde position du faisceau. De cette façon, l'utilisateur, une fois l'obstacle repéré ne peut pas se tromper puisque c'est directement le dispositif qui engendra la visualisation de la deuxième position du faisceau correspondant à l'angle de sécurité qui est préenregistré dans les moyens électroniques de traitement et de commande du dispositif.

Selon une caractéristique, le dispositif comporte des moyens électroniques de traitement et commande et un système d'actionnement, les moyens électroniques de traitement et de commande étant aptes à :
- déplacer angulairement (dans le plan de sortie du faisceau) le faisceau en réponse à un actionnement volontaire du système d'actionnement jusqu'à la première position correspondant à la ligne de référence,
- enregistrer cette première position et déplacer angulairement de manière automatisée le faisceau d'un angle de sécurité, en particulier de 30°, par rapport à la première position jusqu'à la seconde position, et
- verrouiller (en particulier de manière automatisée) la seconde position.

Selon une caractéristique, le dispositif comporte des moyens électroniques de traitement et de commande pour le fonctionnement du dispositif et des boutons d'interface pour l'utilisateur, de préférence des boutons tactiles, reliés aux moyens électroniques de traitement et de commande, les boutons comprenant un bouton marche/arrêt, et pour un faisceau, trois boutons dont un premier bouton de réinitialisation et de validation (SET), un deuxième bouton pilotant la rotation angulaire du faisceau dans un sens de rotation tel que le sens horaire, et un troisième bouton pilotant la rotation angulaire du faisceau dans un sens opposé de rotation tel que le sens anti-horaire, de préférence la première position du faisceau correspondant à une ligne de référence étant automatiquement enregistrée lorsque l'utilisateur relâche le bouton sur lequel il a appuyé pour régler la position angulaire de cette première position et qu'il appuie de suite après sur le premier bouton de réinitialisation et de validation SET (en l'occurrence pour valider la première position), ce qui engendre automatiquement la rotation angulaire de l'angle de sécurité jusqu'à la seconde position.

En variante, dans un autre mode de fonctionnement semi-automatisé, le dispositif peut comprendre un premier bouton à tourner manuellement pour déplacer angulairement le faisceau, un deuxième bouton d'appui pour valider la première position de référence (une fois le premier bouton tourné jusqu'à la position de référence), la seconde position du faisceau étant ensuite automatiquement générée par déplacement angulaire du faisceau de la première position à la deuxième position selon l'angle de sécurité prédéfini.

Selon une caractéristique, la seconde position est décalée de la première position d'un angle de 30° préenregistré (le dispositif est conçu avec cette valeur de 30° préenregistrée en usine), ou le dispositif peut comprendre une interface pour définir volontairement et préalablement l'angle de sécurité et l'enregistrer.

Selon une caractéristique, le dispositif comporte au moins une sortie de distribution dudit au moins un faisceau, qui est orientée en étant inclinée vers l'opposé de la surface supérieure du boîtier (c'est-à-dire inclinée vers le bas et vers le sol en position d'utilisation).

Avantageusement, le dispositif comporte un témoin de mise de niveau du boîtier, en particulier le témoin est un niveau à bulle.

Selon une caractéristique, le dispositif comporte une batterie, de préférence coopérant de manière amovible avec le boîtier, et un indicateur de niveau de charge de la batterie, de préférence visible sur le dessus (la face supérieure) du boîtier.

Selon une caractéristique, le dispositif comporte un système de sécurité de coupure du faisceau, voire de coupure de l'alimentation électrique du dispositif, en cas d'inclinaison angulaire du dispositif par rapport à son plan horizontal d'utilisation, en particulier le boîtier comporte (loge) au moins un capteur d'inclinaison et le système de sécurité de coupure étant intégré aux moyens électroniques de traitement et de commande qui traitent les données du capteur d'inclinaison, de préférence la coupure du faisceau étant déclenchée dès qu'une inclinaison angulaire de 15° est détectée et la coupure de l'alimentation électrique est déclenchée dès qu'une inclinaison angulaire de 30°est détectée. Ainsi, si le dispositif bascule vers l'avant ou vers l'arrière lors de sa manipulation, le faisceau se coupe immédiatement évitant tout risque de brûlure, en particulier oculaire vis-à-vis de l'utilisateur.

L'invention porte également sur un ensemble comportant un dispositif de sécurité précité de l'invention, et un support d'installation de mise en hauteur tel qu'un trépied ou tel qu'un support adapté à se fixer sur une structure en hauteur existante notamment un mirador, de préférence le support étant amovible par rapport à une face du boîtier, telle que la face dite inférieure du boîtier, le dispositif comprenant au moins une forme adaptée de fixation avec le support. Le support pour mirador pour un chasseur posté sur un mirador ou le support sur trépied pour un chasseur posté au sol procurent une stabilité de l'ensemble et donc du dispositif de sécurité, l'efficacité du réglage du dispositif de sécurité s'en trouvant alors renforcée.

L'invention est également relative à un procédé de mise en œuvre du dispositif de sécurité précité de l'invention, le procédé selon un exemple préféré comportant les étapes suivantes :
- installation de manière fixe du dispositif face à un utilisateur ;
- mise en fonctionnement du dispositif, le dispositif comprenant plusieurs organes d'interface avec l'utilisateur dont au moins deux boutons à fonction de rotation horaire et anti-horaire ;
- appui sur l'un des boutons à fonction de rotation du faisceau pour générer un faisceau en une sortie de distribution sur l'un des côtés du dispositif et de l'utilisateur, et pour faire tourner le faisceau jusqu'à ce que le faisceau coïncide en alignement avec un obstacle tel que O1 à sécuriser, et appui éventuel sur l'autre bouton à fonction de rotation pour faire tourner le faisceau en sens inverse jusqu'à aligner le faisceau parfaitement avec l'obstacle, le faisceau étant alors aligné dans la première position ;
- appui sur un bouton de validation pour valider (enregistrer) la première position, ce qui engendre le déplacement angulaire (autour d'un axe vertical) de manière automatisée du faisceau jusqu'à la seconde position d'angle de sécurité par rapport à la première position d'alignement avec l'obstacle à sécuriser ;
- éventuellement, l'utilisateur reproduit les mêmes gestes pour l'autre côté du dispositif et donc l'autre côté de l'utilisateur si le dispositif comporte un autre système de distribution d'un deuxième faisceau, ou si le dispositif ne comporte qu'un seul système de distribution de faisceau, en ayant retourné le dispositif afin que le faisceau soit délivré de l'autre côté.

La présente invention est maintenant décrite à l'aide d'exemples uniquement illustratifs et nullement limitatifs de la portée de l'invention, et à partir des illustrations jointes, dans lesquelles :
- [Fig. 1] représente une vue en perspective d'un dispositif de sécurité et de visualisation d'un angle de sécurité pour le tir selon une première configuration de l'invention, et d'un support sous la forme d'un trépied pour installer le dispositif en hauteur. La première configuration permet de visualiser un angle de sécurité à gauche ou à droit lorsqu'est installé le dispositif.
- [Fig. 2] représente une vue en perspective d'un dispositif de sécurité et de visualisation d'un angle de sécurité pour le tir selon une seconde configuration de l'invention. La seconde configuration permet de visualiser en même temps un angle de sécurité à gauche et un angle de sécurité à droite lorsqu'est installé le dispositif.
- [Fig. 3] est une vue dessous du dispositif de la figure 2 avec la batterie retirée.
- [Fig. 4] est une vue de dessus du dispositif de la figure 2.
- [Fig. 5] est une vue schématique en coupe longitudinale du dispositif de la figure 2.
- [Fig. 6] illustre une vue schématique de mise en œuvre du dispositif de la figure 2.
- [Fig. 7] représente une vue en perspective du dispositif de sécurité de la figure 1 accouplé à un support d'installation monté sur une structure fixe existante telle qu'un mirador.

Le dispositif 1A ou 1B de l'invention, de sécurité et de visualisation d'un angle de sécurité pour le tir, notamment pour le tir à la chasse, illustré sur les figures, fournit au moins un faisceau lumineux dans le domaine des longueurs d'ondes du visible, ce faisceau étant déplaçable angulairement de préférence de manière automatisée entre une position de référence qui est alignée avec l'objet ou la personne à sécuriser (dit ci-après obstacle) et une position correspondant à l'angle de sécurité α, par exemple de 30°, par rapport à la position de référence.

Un seul faisceau sert dans un premier temps de faisceau de référence en s'alignant avec l'objet ou la personne à protéger, et dans un second temps de faisceau de détermination de l'angle de sécurité.

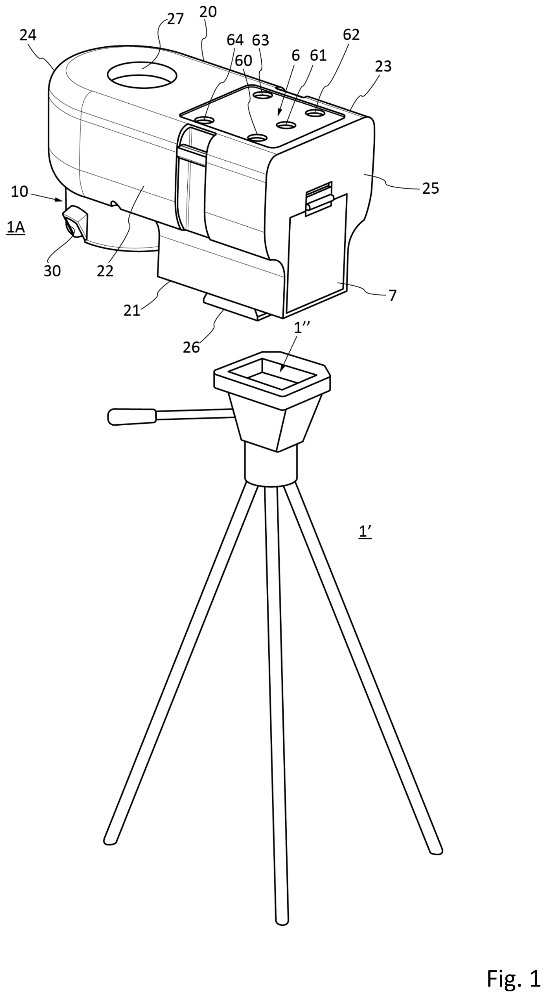

La figure 1 illustre une première configuration du dispositif 1A avec la fourniture d'un premier faisceau pour délimiter un premier angle de sécurité.

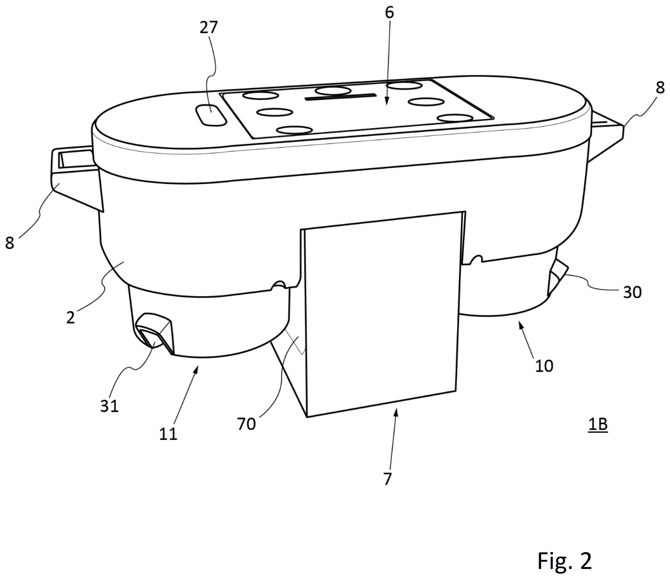

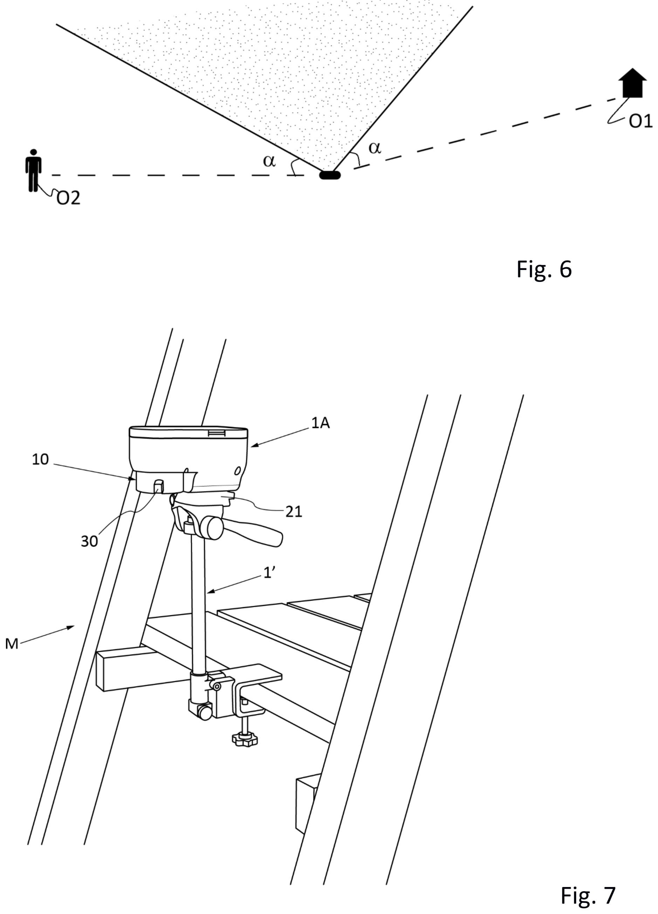

Les figures 2 à 6 illustrent une seconde configuration du dispositif 1B avec la fourniture d'un premier faisceau et d'un second faisceau pour délimiter avec le même dispositif, deux angles respectifs de sécurité, un angle α à gauche et un angle α à droite en tenant compte de deux obstacles, l'un à droite O1 de l'utilisateur et l'autre à gauche O2. Comme illustré sur la figure 6, quel que soit l'emplacement de l'obstacle O1 à sécuriser à droite et de l'obstacle O2 à sécuriser à gauche, même si ces deux obstacles ne sont pas alignés, le dispositif 1 de l'invention pourra aisément, et de préférence de manière automatisée, délimiter la zone sécurisée de tir qui correspond à la zone intérieure (schématisée de manière mouchetée) entre les deux faisceaux F1 (angle de 30° sur la gauche de l'obstacle de droite O1) et F2 (angle de 30° sur la droite de l'obstacle de gauche O1).

Par conséquent, comprend un bloc de distribution 10 d'un seul faisceau. La seconde configuration du dispositif 1B comprend deux blocs de distribution 10 et

Le dispositif 1A, 1B comporte un boîtier 2 et de préférence un support d'installation en hauteur 1' tel qu'un trépied (figure 1) ou un support adapté à se fixer sur une structure fixe et en hauteur existante M telle qu'un mirador (fi-gure 7). Le support 1' permet de rendre fixe le boîtier 1 de sorte que l'utilisateur en ne portant pas à la main le dispositif est sûr que le dispositif n'a pas de risque de bouger lors des prises de mesure et que les angles de sécurité seront fiables.

Le boîtier 2 présente un corps de forme générale de préférence parallélépipédique et comprend une face supérieure 20, une face inférieure 21, deux premières faces latérales opposées 22 et 23, et deux secondes faces latérales opposées 24 et 25.

Le boitier 2 comporte pour la première configuration du dispositif 1, une seule unité 10 de distribution d'un seul faisceau.

Le boitier 2 comporte pour la seconde configuration du dispositif 1B, deux unités 10 et 11 de distribution, chacune d'un seul faisceau. Le boitier 2 de la seconde configuration du dispositif 1B est de forme oblongue, les deux unités de distribution 10 et 11 étant diamétralement opposées. Les unités de distribution 10 et 11 sont en partie inférieure du boîtier. Les unités de distribution 10 et 11 sont dans un même plan et son diamétralement opposées. La première unité de distribution 10 délivre un seul faisceau à droite afin de délimiter un angle de sécurité par rapport à un obstacle se trouvant à la droite de l'utilisateur. La seconde unité de distribution 11 délivre un seul faisceau à gauche pour délimiter un angle de sécurité par rapport à un obstacle se trouvant à la gauche de l'utilisateur.

En outre, le boitier 2 loge au moins un système de génération 3 dudit faisceau lumineux dans le domaine des longueurs d'ondes du visible, au moins un système de mobilité en rotation 4 du faisceau, des moyens électroniques de commande 5 dudit au moins un système de génération 3 du faisceau et dudit au moins un système de mobilité 4, et un système d'actionnement 6 pour le pilotage des moyens de commande 5. Le boitier 2 loge en outre une batterie 7 pour l'alimentation électrique dudit au moins un système de génération 3 de faisceau, dudit au moins un système de mobilité en rotation 4 du faisceau et des moyens électroniques de commande 5.

Une seule unité de distribution 10, 11 d'un faisceau comporte un système 3 de génération de faisceau logé de manière intérieure au boîtier, et une seule sortie de distribution de faisceau 30, respectivement 31 débouchant sur l'extérieur du boîtier. Par conséquent, le dispositif 1A de première configuration comporte un seul système 3 de génération de faisceau et une seule sortie de distribution 30 de faisceau. Le dispositif 1B de seconde configuration comporte deux systèmes 3 de génération de faisceau, opposés, et deux sorties opposées de distribution 30 et 31 de faisceau, chacune des deux sorties de distribution 30, 31 est indépendante l'une de l'autre en fonctionnement, c'est-à-dire que le faisceau de la première sortie 30 est indépendant angulairement du faisceau de la seconde sortie 31 et le positionnement de l'un est indépendant du positionnement de l'autre.

Le dispositif 1A, 1B a pour but d'être installé en hauteur, chaque faisceau étant délivré vers le bas. En position installée du dispositif, chaque faisceau est ainsi délivré en étant incliné par rapport à la verticale et est apte à pivoter autour de la verticale pour repérer par ledit faisceau la limite au-delà de laquelle le tireur n'a pas le droit de tirer. Le dispositif 1A de première configuration présente son unité 10 de distribution de faisceau qui comprend en extrémité inférieure une sortie de distribution 30 d'un faisceau, la sortie de distribution 30 étant orientée avec une inclinaison en direction opposée de la face supérieure 20 du boîtier (c'est-à-dire vers le bas en position installée du dispositif). Le dispositif 1B de seconde configuration comprend en extrémité inférieure de chacune des unités 10 et 11 de distribution de faisceau, une sortie de distribution 30 d'un faisceau, et respectivement une sortie de distribution 31 d'un autre faisceau, chacune des sorties de distribution 30 et 31 étant orientée avec une inclinaison en direction opposée de la face supérieure 20 du boîtier (c'est-à-dire vers le bas en position installée du dispositif).

A chaque système 3 de distribution d'un faisceau est couplé un système de mobilité en rotation 4 (logé à l'intérieur du boîtier). Chaque système de mobilité en rotation 4 est apte à faire tourner autour d'un axe perpendiculaire à la face supérieure 20 plane du boîtier, le système associé 3 de génération de faisceau de façon à faire pivoter angulairement le faisceau sortant de la sortie de distribution 30 ou 31 de la position de référence jusqu'à la position d'angle de sécurité. Chaque système de mobilité en rotation 4 est conçu pour faire tourner le faisceau selon un sens de rotation ou dans un sens opposé de rotation pour ajuster la position de référence, et pour faire tourner le faisceau dans un seul sens afin de passer de la position de référence à la position d'angle de sécurité.

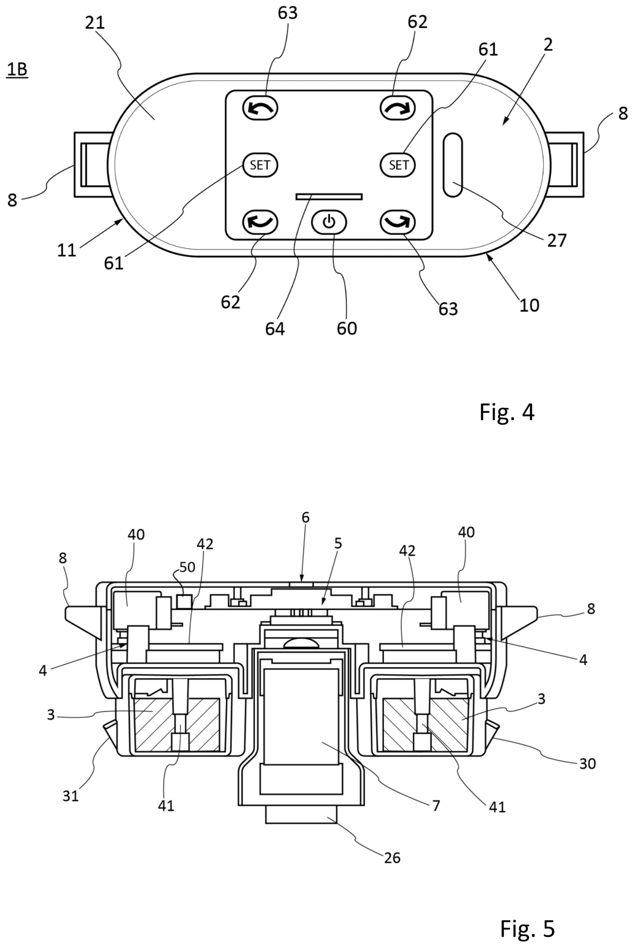

En regard de la figure 5 schématique, chaque système de mobilité en rotation 4 comporte un moteur 40, un arbre rotatif 41 qui porte le système 3 de génération de faisceau et qui est relié directement ou indirectement au moteur 40 pour son entraînement, et éventuellement une interface 42 par engrenages, agencée entre le moteur 40 et l'arbre rotatif 41 afin d'adapter la vitesse de rotation de l'arbre 41 et donc du système 3 de génération de faisceau en fonction de la vitesse du moteur et de l'encombrement à l'intérieur du boîtier (qui vise à être le moins volumineux possible). Le moteur 40 est conçu pour tourner dans deux sens afin de faire tourner le faisceau selon un sens de rotation ou dans un sens opposé de rotation. Les moyens électroniques de commande 5 pilotent le moteur 40.

Le boîtier 2 est étagé en comportant en partie inférieure le ou les unités de distribution 10 et 11 d'un faisceau et au-dessus le ou les systèmes de mobilité en rotation 4 (avec leur moteur). Les moyens électroniques de commande 5 du ou des deux systèmes de génération 3 d'un faisceau et du ou des deux systèmes de mobilité 4, sont une carte électronique qui est logée à l'intérieur du boîtier. En particulier, les moyens électroniques de commande 5 (la carte électronique) sont situés à proximité immédiate de la face supérieure 20, juste en-dessous de celle-ci et à l'intérieur du boîtier 2 pour être directement reliés électriquement au système d'actionnement 6 qui est agencé sur la face supérieure 20. Le système d'actionnement 6 comprend plusieurs organes d'actionnement (de préférence du type boutons tactiles) qui sont situés sur la face supérieure 20 pour être accessibles par l'utilisateur.

En regard de la figure 4, le système d'actionnement 6 comporte un bouton de marche/arrêt 60, et par unité de distribution de faisceau 10,11, un bouton de réinitialisation et de validation 61 (« SET »), un premier bouton 62 à fonction de rotation pour faire tourner le faisceau dans un sens de rotation (par exemple le sens horaire) et un second bouton 63 à fonction de rotation pour faire tourner le faisceau dans le sens de rotation opposé (sens anti-horaire). Les boutons 62 et 63 à fonction de rotation sont des boutons tactiles ; en apposant avec le doigt une pression dessus, le faisceau tourne à droite pour le bouton 62 en sens horaire et tourne à gauche pour le bouton 63 en sens anti-horaire. L'actionnement de ces boutons 62 et 63 à fonction de rotation permet de positionner le faisceau dans l'alignement de l'obstacle à sécuriser, ce qui correspond à la première position de référence. Une fois que l'utilisateur veut valider la première position, il appuie sur le bouton 61 de validation SET, ce qui fait automatiquement tourner le faisceau de la première position de référence à la seconde position d'angle de sécurité, en particulier en tournant de 30° dans la direction opposée à l'obstacle (faisceau F1 ou F2 de la figure 6).

Avantageusement, la surface supérieure 20 du dispositif, comporte en particulier au niveau de la surface du système d'actionnement 6 qui est connecté en-dessous à la carte électronique 5, un indicateur 64 de charge de la batterie 7.

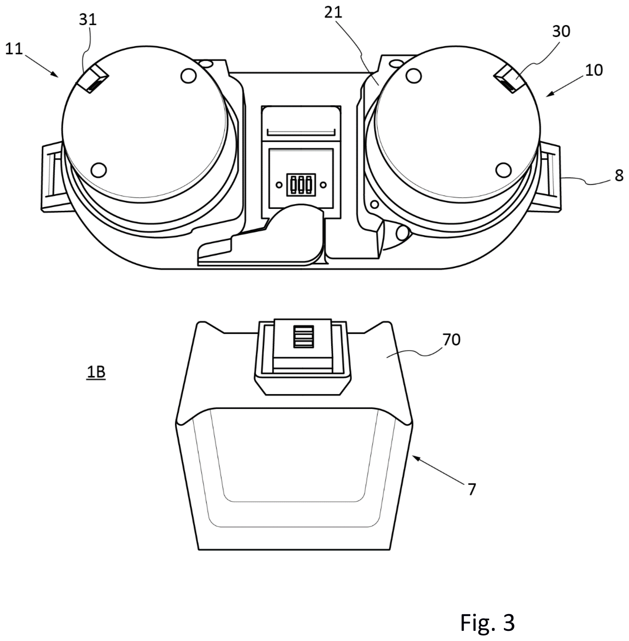

La batterie 7 est avantageusement amovible. La batterie 7 est par exemple fixée par encliquetage. Dans le boîtier 1A de première configuration (figure 1), la batterie 7 est accessible depuis une face latérale 25. Dans le boîtier 1B de seconde configuration (figures 2 et 3), la batterie 7 est accessible depuis la face inférieure 21 et est positionnée entre les deux unités de distribution 10 et 11 d'un faisceau.

Le dispositif 1A, 1B comporte, directement au niveau du corps du boîtier ou de la batterie 7, une forme adaptée de fixation par coopération mutuelle par fixation rapide avec le support 1'. Par exemple, le corps du boîtier 1A de première configuration comporte en saillie de la face inférieure 21, une forme mâle 26 adaptée à coopérer mutuellement avec une forme femelle 1" du support 1'. Dans le second mode de configuration, la batterie 7 du boîtier 1B, qui est installée en face inférieure comporte une forme mâle en saillie 70 adaptée à coopérer mutuellement avec la forme femelle 1" du support 1'. La forme femelle 1" du support 1' est par exemple couplée à un élément de serrage à rappel élastique qui verrouille le boîtier 1A ou 1B lorsque la forme mâle 26 du boîtier ou 70 de la batterie a été introduite dans la forme femelle 1" du support.

Avantageusement, le dispositif 1 comporte, de préférence sur la surface supérieure 20, un témoin de mise de niveau 27 du boîtier 2 et donc du dispositif 1, en particulier le témoin 27 est un niveau à bulle.

Avantageusement, le dispositif 1A, 1B, comporte au niveau du corps du boîtier des moyens de fixation 8 pour une sangle (la sangle étant ici non illustrée) de manière à faciliter le transport du dispositif.

De préférence, le boîtier loge au moins un capteur d'inclinaison 50 (figure 5) et un système de sécurité de coupure intégré aux moyens électroniques 5 de traitement et de commande qui traitent les données du capteur d'inclinaison. En cas d'inclinaison au-delà d'une valeur seuil préenregistrée (par exemple le dispositif bascule), le faisceau se coupe immédiatement.

Le procédé de mise en œuvre dispositif 1B de sécurité de visualisation des angles de tir va à présent être décrit en regard de la figure 6.

L'utilisateur installe de manière fixe le dispositif en le positionnant face à lui. Il fixe le dispositif via la forme de fixation 70 sur le support 1' par exemple. Il appuie sur le bouton 60 de marche. Il veut d'abord délimiter un angle de sécurité par rapport à un obstacle O1 (personne, maison ou autre) se trouvant par exemple à droite. Il appuie sur l'un des boutons à fonction de rotation, par exemple 61 correspondant à l'unité 10 de droite du boîtier, pour générer le faisceau à la sortie de distribution 30 et pour faire tourner le faisceau jusqu'à ce que le faisceau coïncide en alignement avec l'obstacle O1 à sécuriser à la droite de l'utilisateur ; s'il a dépassé légèrement l'obstacle, il appuie sur le second bouton à fonction de rotation pour faire tourner en sens inverse le faisceau jusqu'à l'aligner parfaitement avec l'obstacle (ligne schématisée en pointillés sur la figure 6 entre le dispositif 1 et l'obstacle O1). Ensuite, l'utilisateur n'appuie plus sur aucun bouton et après 5 secondes, le faisceau tourne automatiquement de 30°, le réglage est terminé pour la droite et l'unique faisceau F1 à droite délimite alors la ligne de sécurité au-delà de laquelle à droite il est interdit de tirer. L'utilisateur procède de la même manière pour sa gauche en appuyant sur le ou les boutons à fonction de rotation 61 et 62 de l'unité 11 de gauche du boîtier pour aligner le faisceau sortant de la sortie de distribution 31. Une fois le faisceau aligné avec l'obstacle O2 (ligne en pointillés entre le dispositif 1 et O2), le faisceau tourne automatiquement de 30° pour définir l'unique faisceau F2 à gauche qui délimite la ligne de sécurité au-delà de laquelle à gauche il est interdit de tirer. Le dispositif 1B présente l'avantage qu'avec un seul appareil, le tireur visualise devant lui son angle de tir autorisé à droite et à gauche (angle entre F1 et F2). Si l'utilisateur veut reprendre une mesure, il appuie sur le bouton de réinitialisation 60 de l'unité 10 ou 11 selon que le faisceau doit être rematérialisé à droite ou à gauche, avant de réappuyer sur l'un des boutons à fonction de rotation 61 et 62.

## Revendications

1. Dispositif (1A ; 1B) de sécurité et de visualisation d'un angle de sécurité pour le tir, notamment pour le tir à la chasse, comportant un boîtier (2) qui loge au moins un système de génération (3) d'au moins un faisceau lumineux dans le domaine des longueurs d'ondes du visible, le faisceau sortant du boîtier étant apte à délimiter un angle de sécurité pour le tir par rapport une ligne de référence, **caractérisé en ce que** le faisceau est déplaçable angulairement tandis que le boîtier reste fixe et **en ce que** le faisceau adopte une première position qui correspond à la ligne de référence et une seconde position (F1 ; F2) qui est décalée de l'angle de sécurité par rapport à la première position.

2. Dispositif selon la revendication 1, **caractérisé en ce qu'**il comprend un seul système de génération (3) d'un seul faisceau lumineux.

3. Dispositif selon la revendication 1, **caractérisé en ce qu'**il comprend deux systèmes de génération (3) de respectivement deux faisceaux distincts lumineux dans le domaine des longueurs d'ondes du visible et **en ce que** les faisceaux (F1, F2) qui sortent du boitier délimitent deux angles de sécurité respectifs à droite et à gauche du dispositif.

4. Dispositif selon la revendication précédente, **caractérisé en ce que** les deux faisceaux (F1, F2) sont déplaçables angulairement de manière indépendante l'un par rapport à l'autre, le déplacement angulaire de chacun des deux faisceaux étant référencé par rapport à une première position de référence qui a été donnée de manière indépendante à chacun des faisceaux.

5. Dispositif de sécurité selon l'une quelconque des revendications précédentes, **caractérisé en ce qu'**il comporte, couplé à un système de génération (3) d'un faisceau, un système de déplacement angulaire (4) du faisceau qui est semi-automatisé, en étant manuel via au moins un organe d'interface-utilisateur (601, 62) tel qu'un bouton à tourner ou sur lequel appuyer pour établir la première position, puis en étant automatisé pour passer directement de la première position à la seconde position sans intervention de l'utilisateur.

6. Dispositif de sécurité selon l'une quelconque des revendications précédentes, **caractérisé en ce qu'**il comporte, couplé à un système de génération (3) d'un faisceau, un système de déplacement angulaire (4) du faisceau, qui est automatisé pour passer de la première position du faisceau à la seconde position du faisceau une fois la première position enregistrée.

7. Dispositif de sécurité selon la revendication précédente, **caractérisé en ce qu'**il comporte des moyens électroniques de traitement et de commande (5) et un système d'actionnement (6), les moyens électroniques de traitement et de commande (5) étant aptes à :
- déplacer angulairement (dans le plan de sortie du faisceau) le faisceau en réponse à un actionnement volontaire du système d'actionnement jusqu'à la première position correspondant à la ligne de référence,
- enregistrer cette première position et déplacer angulairement de manière automatisée le faisceau d'un angle de sécurité, en particulier 30°, par rapport à la première position jusqu'à la seconde position, et
- verrouiller la seconde position.

8. Dispositif de sécurité selon l'une quelconque des revendications précédentes, **caractérisé en ce qu'**il comporte des moyens électroniques de traitement et de commande (6) pour le fonctionnement du dispositif et des boutons d'interface pour l'utilisateur, de préférence des boutons tactiles, reliés aux moyens électroniques de traitement et de commande, les boutons comprenant un bouton marche/arrêt (60), et pour un faisceau, trois boutons dont un premier bouton (61) de réinitialisation et de validation, un deuxième bouton (62) pilotant la rotation angulaire du faisceau dans un sens de rotation tel que le sens horaire, et un troisième bouton (63) pilotant la rotation angulaire du faisceau dans un sens opposé de rotation tel que le sens anti-horaire, de préférence la première position du faisceau correspondant à une ligne de référence étant automatiquement enregistrée lorsque l'utilisateur relâche le bouton sur lequel il a appuyé pour régler la position angulaire de cette première position et qu'il appuie de suite après sur le premier bouton (61) de réinitialisation et de validation.

9. Dispositif de sécurité selon l'une quelconque des revendications précédentes, **caractérisé en ce que** la seconde position est décalée de la première position d'un angle de 30° préenregistré, ou le dispositif comprend une interface pour définir volontairement et préalablement l'angle de sécurité et l'enregistrer dans des moyens électroniques de traitement et de commande (5).

10. Dispositif de sécurité selon l'une quelconque des revendications précédentes, **caractérisé en ce qu'**il comporte au moins une sortie de distribution (30, 31) dudit au moins un faisceau, qui est orientée en étant inclinée vers l'opposé de la surface supérieure du boîtier.

11. Dispositif de sécurité selon l'une quelconque des revendications précédentes, **caractérisé en ce qu'**il comporte un témoin (27) de mise de niveau du boîtier, en particulier le témoin est un niveau à bulle.

12. Dispositif de sécurité selon l'une quelconque des revendications précédentes, **caractérisé en ce qu'**il comporte une batterie (7), de préférence coopérant de manière amovible avec le boîtier (2), et un indicateur (64) de niveau de charge de la batterie, de préférence visible sur le dessus du boîtier.

13. Dispositif de sécurité selon l'une quelconque des revendications précédentes, **caractérisé en ce qu'**il comporte un système de sécurité de coupure du faisceau, voire de coupure de l'alimentation électrique du dispositif, en cas d'inclinaison angulaire du dispositif par rapport à son plan horizontal d'utilisation, en particulier le boîtier comportant au moins un capteur d'inclinaison (50) et le système de sécurité de coupure étant intégré à des moyens électroniques de traitement et de commande (5) qui traitent les données du capteur d'inclinaison.

14. Ensemble comportant un dispositif de sécurité selon l'une quelconque des revendications précédentes, et un support (1') d'installation de mise en hauteur tel qu'un trépied ou tel qu'un support adapté à se fixer sur une structure en hauteur existante (M) notamment un mirador, de préférence le support (1') étant amovible par rapport à une face du boîtier, telle que la face dite inférieure (21) du boîtier, le dispositif comprenant au moins une forme adaptée de fixation (26 ; 70) avec le support (1').

15. Procédé de mise en œuvre d'un dispositif de sécurité selon l'une quelconque des revendications 1 à 13, comportant les étapes suivantes :
- installation de manière fixe du dispositif face à un utilisateur ;
- mise en fonctionnement du dispositif, le dispositif comprenant plusieurs organes d'interface avec l'utilisateur dont au moins deux boutons (62, 63) à fonction de rotation horaire et anti-horaire ;
- appui sur l'un des boutons à fonction de rotation du faisceau pour générer un faisceau en une sortie de distribution sur l'un des côtés du dispositif et de l'utilisateur, et pour faire tourner le faisceau jusqu'à ce que le faisceau coïncide en alignement avec un obstacle tel que O1 à sécuriser, et appui éventuel sur l'autre bouton à fonction de rotation pour faire tourner le faisceau en sens inverse jusqu'à aligner le faisceau parfaitement avec l'obstacle, le faisceau étant alors aligné dans la première position ;
- appui sur un bouton de validation (61) pour valider la première position, ce qui engendre le déplacement angulaire de manière automatisée du faisceau jusqu'à la seconde position d'angle de sécurité par rapport à la première position d'alignement avec l'obstacle à sécuriser ;
- éventuellement, l'utilisateur reproduit les mêmes gestes pour l'autre côté du dispositif et donc l'autre côté de l'utilisateur si le dispositif comporte un autre système de distribution d'un deuxième faisceau, ou si le dispositif ne comporte qu'un seul système de distribution de faisceau, en ayant retourné le dispositif afin que le faisceau soit délivré de l'autre côté.
